# EUROPÄISCHE PATENTSCHRIFT

(11) **EP 3 695 268 B1**
(45) Veröffentlichungstag und Bekanntmachung des Hinweises auf die Patenterteilung: **10.11.2021**
(21) Anmeldenummer: 18779219.7
(22) Anmeldetag: 12.09.2018
(51) Int. Cl.: G02B 27/01

(54) **TRAGBARE VORRICHTUNG ZUR REDUZIERUNG VON SIMULATORKRANKHEITSBEDINGTEN STÖRUNGEN BEI VERWENDUNG EINER ELEKTRONISCHEN DATENBRILLE IN EINEM FAHRZEUG**
PORTABLE DEVICE FOR REDUCING SIMULATOR SICKNESS-INDUCED IMPAIRMENTS DURING THE USE OF ELECTRONIC AUGMENTED REALITY GLASSES IN A VEHICLE
DISPOSITIF PORTATIF DESTINÉ À RÉDUIRE DES PERTURBATIONS LIÉES AU MAL DE SIMULATEUR LORS DE L'UTILISATION DE LUNETTES INTELLIGENTES ÉLECTRONIQUES DANS UN VÉHICULE

(30) Priorität: 13.10.2017 DE 102017218352
(43) Veröffentlichungstag der Anmeldung: 19.08.2020
(73) Patentinhaber: Audi AG, 85045 Ingolstadt (DE)
(72) Erfinder: KÜHNE, Marcus, 92339 Beilngries (DE); WOLLNY, Nils, 80538 München (DE); PROFENDINER, Daniel, 85049 Ingolstadt (DE)
(86) Internationale Anmeldenummer: PCT/EP2018/074581
(87) Internationale Veröffentlichungsnummer: WO 2019/072482

(56) Entgegenhaltungen:
- EP-A1- 2 933 707
- WO-A1-2017/031273
- DE-A1-102009 033 878
- US-A1- 2006 011 379
- US-A1- 2017 291 639
- US-B2- 9 274 337
- Anonymous: "MidGard Universal Autohalterung für: Amazon.de: Elektronik", , 12. September 2017 (2017-09-12), XP055528542, Gefunden im Internet: URL:https://www.amazon.de/MidGard-Universa l-Autohalterung-KFZ-Getränkehalter-Smartph ones-Schwarz/dp/B075LH3CPY/ref=sr_1_4?ie=U TF8&qid=1543499194&sr=8-4&keywords=smartph one+halterung+getränkehalter [gefunden am 2018-11-29]

## Beschreibung

Die Erfindung betrifft eine tragbare Vorrichtung zur Reduzierung von simulatorkrankheitsbedingten Störungen bei Verwendung einer elektronischen Datenbrille in einem Fahrzeug. Des Weiteren betrifft die Erfindung ein Anzeigesystem für ein Fahrzeug, umfassend die tragbare Vorrichtung sowie wenigstens eine elektronische Datenbrille.

In Zukunft werden in Fahrzeugen zunehmend immersive Technologien genutzt werden. Beispielsweise werden Fahrzeuginsassen während der Fahrt klassische Medieninhalte, wie beispielsweise Filme, Konsolenspiele und dergleichen, konsumieren oder zum Beispiel im Internet surfen, vorzugsweise indem sie eine Virtual-Reality-Brille oder eine Augmented-Reality-Brille aufgesetzt haben. Hierbei kann das Problem der sogenannten Simulatorkrankheit, oftmals auch als Simulator Sickness bezeichnet, aufkommen. Simulatorkrankheitsbedingte Störungen, also auf die Simulatorkrankheit zurückzuführende Symptome, treten üblicherweise durch Dissonanzen zwischen Sinneseindrücken im Hinblick auf die visuell wahrgenommenen Reize und die mittels des Gleichgewichtsorgans empfundenen Bewegungskräfte auf. Bei der Verwendung elektronischer Datenbrillen in sich fortbewegenden Fahrzeugen kann das Problem auftreten, dass die mittels der elektronischen Datenbrille angezeigten Inhalte nicht zu der von der jeweiligen Person wahrgenommenen realen Bewegung passen.

Ein geeignetes Mittel zur Eliminierung beziehungsweise Abschwächung dieses Effekts der simulatorkrankheitsbedingten Störungen besteht darin, mittels solcher elektronischer Datenbrillen zusätzlich noch Inhalte anzuzeigen, welche der Eigenbewegung des Fahrzeugs entsprechen.

So zeigt beispielsweise die DE 101 56 219C1 ein Verfahren und eine Vorrichtung zur Reduzierung von Kinetose-Störungen, unter welche auch die Simulatorkrankheit, beziehungsweise Simulator Sickness, fällt. Dabei ist es vorgesehen, die Fahrzeugeigenbewegung mittels Sensoren zu erfassen, wobei die Sensoren beispielsweise fahrzeugseitig angebracht oder auch in Form von tragbaren Detektoren am Körper eines Passagiers angebracht sind. Mittels eines Head-Mounted-Displays werden dann unter anderem auch die mittels der Sensoren erfassten Eigenbewegungen des Fahrzeugs visualisiert.

Die US 2015/0097860 A1 beschreibt ein Verfahren, mittels welchem verhindert werden soll, dass beim Tragen einer elektronischen Datenbrille im Fahrzeug einem Fahrzeuginsassen übel wird. Dabei ist es vorgesehen, mittels fahrzeugseitiger Systeme die Fahrzeugeigenbewegung charakterisierende Bewegungsdaten bereitzustellen, sodass diese mittels der elektronischen Datenbrille visualisiert werden können.

Zudem zeigt die US 2011/0282130 A1 eine elektronische Datenbrille mit integrierten Sensoren, mittels welchen simulatorkrankheitsbedingte Störungen reduziert werden können sollen.

Die EP2933707 A1 offenbart eine Tragbare Vorrichtung mit einen Datenausgang, welcher dazu ausgelegt ist, eine Eigenbewegung eines Fahrzeugs charakterisierende Bewegungsdaten an eine elektronische Datenbrille zu übertragen,

Es ist die Aufgabe der vorliegenden Erfindung, eine besonders einfache Lösung bereitzustellen, mittels welcher simulatorkrankheitsbedingte Störungen bei der Verwendung einer elektronischen Datenbrille in einem Fahrzeug reduziert werden können.

Diese Aufgabe wird durch eine tragbare Vorrichtung zur Reduzierung von simulatorkrankheitsbedingten Störungen mit den Merkmalen des Patentanspruchs 1 gelöst. Vorteilhafte Ausgestaltungen mit zweckmäßigen und nichttrivialen Weiterbildungen der Erfindung sind in den abhängigen Ansprüchen angegeben.

Die erfindungsgemäße tragbare Vorrichtung zur Reduzierung von simulatorkrankheitsbedingten Störungen bei Verwendung einer elektronischen Datenbrille in einem Fahrzeug umfasst einen Datenausgang, welcher dazu ausgelegt ist, eine Eigenbewegung des Fahrzeugs charakterisierende Bewegungsdaten an die elektronische Datenbrille zu übertragen. Es ist also erfindungsgemäß vorgesehen, in Form der tragbaren Vorrichtung eine Art Elektronikbox beziehungsweise kleine Hardwarebox bereitzustellen, welche die besagten Bewegungsdaten erheben und über den Datenausgang an die elektronische Datenbrille übertragen kann.

Die elektronische Datenbrille als solche benötigt keinerlei Sensoren, um die Eigenbewegung des Fahrzeugs zu erfassen. Zudem kann unabhängig vom Fahrzeug die tragbare Vorrichtung jederzeit mitgenommen und dafür verwendet werden, simulatorkrankheitsbedingte Störungen zu reduzieren oder vollständig zu eliminieren, wenn die elektronische Datenbrille während der Fahrt mit dem Fahrzeug verwendet wird. Ein Benutzer der elektronischen Datenbrille braucht also lediglich die tragbare Vorrichtung mit sich zu führen und irgendwo im Fahrzeug unterzubringen, wenn er die elektronische Datenbrille während der Fahrt mit dem Fahrzeug nutzen will.

Dadurch, dass die tragbare Vorrichtung über ihren Datenausgang die Eigenbewegung des Fahrzeugs charakterisierende Bewegungsdaten an die elektronische Datenbrille übertragen kann, kann diese während der Benutzung im Fahrzeug zur Reduzierung von simulatorkrankheitsbedingten Symptomen basierend auf den mittels der tragbaren Vorrichtung übertragenen Bewegungsdaten einer Eigenbewegung des Fahrzeugs entsprechende Inhalte anzeigen. Mittels der erfindungsgemäßen tragbaren Vorrichtung ist es also auf einfache Weise möglich, simulatorkrankheitsbedingte Störungen bei der Verwendung einer elektronischen Datenbrille in einem Fahrzeug zu reduzieren oder auch vollständig zu eliminieren.

Eine vorteilhafte Ausführungsform der Erfindung sieht vor, dass der Datenausgang eine drahtlose und/oder kabelgebundene Schnittstelle zur Datenübertragung an die elektronische Datenbrille aufweist. Je nach verwendeter elektronischer Datenbrille und an ihr vorhandenen Datenschnittstellen kann so der passende Datenübertragungsweg gewählt werden, sei er drahtlos und/oder kabelgebunden.

Eine weitere vorteilhafte Ausführungsform der Erfindung sieht vor, dass die tragbare Vorrichtung einen Dateneingang umfasst, welcher dazu ausgelegt ist, die Bewegungsdaten vom Fahrzeug zu empfangen. So können beispielsweise fahrzeugseitig ohnehin vorhandene Sensoren zur Erfassung der Eigenbewegung des Fahrzeugs verwendet werden, wobei über den besagten Dateneingang der tragbaren Vorrichtung ein Zugriff auf die fahrzeugseitig erhobenen Bewegungsdaten bestehen kann. Beispielsweise kann der Dateneingang ebenfalls eine drahtlose und/oder kabelgebundene Schnittstelle zur Datenübertragung der Bewegungsdaten vom Fahrzeug an die tragbare Vorrichtung aufweisen. So ist es beispielsweise möglich, dass die tragbare Vorrichtung mit ihrem Dateneingang einer sogenannten OBD-Schnittstelle, also einer On-Bord-Diagnose-Schnittstelle, des Fahrzeugs angeschlossen beziehungsweise eingesteckt werden kann. Sofern es fahrzeugseitig möglich ist, kann der Dateneingang beispielsweise auch drahtlos die Bewegungsdaten vom Fahrzeug empfangen. Sofern das Fahrzeug dazu in der Lage ist, seine Eigenbewegung betreffende Bewegungsdaten bereitzustellen, können diese mittels des Dateneingangs der tragbaren Vorrichtung auf einfache Weise genutzt werden.

In weiterer vorteilhafter Ausgestaltung der Erfindung ist es vorgesehen, dass die tragbare Vorrichtung eine Sensoreinrichtung zur Erfassung von zumindest einem Teil der die Eigenbewegung des Fahrzeugs charakterisierenden Bewegungsdaten aufweist. Die tragbare Vorrichtung kann eine oder auch mehrere Sensoren, welche Teil der Sensoreinrichtung sein können, aufweisen. Die Sensoren können beispielsweise Beschleunigungssensoren oder auch andere Sensoren sein, mittels welchen die Eigenbewegung des Fahrzeugs durch die tragbare Vorrichtung selbst erfasst werden kann. Unabhängig davon, welche Sensorik im Fahrzeug verbaut ist, kann so die tragbare Vorrichtung selbst also die Eigenbewegung des Fahrzeugs erfassen.

Gemäß der Erfindung ist die tragbare Vorrichtung dosenförmig ausgebildet. So kann die tragbare Vorrichtung besonders einfach beispielsweise in einem Getränkehalter des Fahrzeugs untergebracht werden. Die tragbare Vorrichtung weist also vorzugsweise eine solche Form beziehungsweise einen solchen Formfaktor auf, dass die tragbare Vorrichtung besonders einfach und sicher im Fahrzeug verstaut werden kann. Im Falle einer dosenförmigen Gestalt der tragbaren Vorrichtung kann dies besonders einfach sichergestellt werden.

In weiterer vorteilhafter Ausgestaltung der Erfindung ist es vorgesehen, dass die tragbare Vorrichtung zur Energieversorgung eine Schnittstelle für ein Bordnetz des Fahrzeugs aufweist und/oder für einen Batteriebetrieb ausgelegt ist. Dadurch kann auf einfache Weise die Energieversorgung der tragbaren Vorrichtung sichergestellt werden.

Gemäß einer weiteren vorteilhaften Ausführungsform der Erfindung ist es vorgesehen, dass die tragbare Vorrichtung eine Mechanik zum Verkanten und/oder Verklemmen der Vorrichtung in einem fahrzeugseitigen Getränkehalter aufweist. Natürlich kann die Mechanik zum Verkanten und/oder Verklemmen der Vorrichtung auch auf andere Aufnahmebereiche im Fahrzeug ausgelegt sein und muss nicht auf einen fahrzeugseitigen Getränkehalter beschränkt sein. Sofern die tragbare Vorrichtung auf den fahrzeugseitigen Getränkehalter abgestimmt ist, kann es vorgesehen sein, dass die Mechanik einen Schraubmechanismus aufweist, mittels welchem ein auf den Getränkehalter abgestimmter Bereich der tragbaren Vorrichtung verbreiterbar ist. Durch Betätigung des Schraubmechanismus kann ein Fahrzeuginsasse die tragbare Vorrichtung auf einfache Weise im beziehungsweise am Getränkehalter fixieren und wieder die Fixierung lösen. Der Schraubmechanismus kann dabei manuell betätigbar oder auch elektrisch betätigbar sein. Alternativ oder zusätzlich ist es auch möglich, dass die Mechanik eine Push-Push-Verriegelungsmechanik aufweist, mittels welcher ein auf den Getränkehalter abgestimmter Bereich der tragbaren Vorrichtung durch ein erstes Zusammendrücken verbreiterbar und durch ein zweites Zusammendrücken wieder verschmälerbar ist. Vorzugsweise ist dabei der auf den Getränkehalter abgestimmte Bereich der tragbaren Vorrichtung aus einem gummiartigen oder anderem elastischen Material ausgebildet. Durch Betätigung der Push-Push-Verriegelungsmechanik kann ein Benutzer dadurch den elastischen, vorzugsweise gummiartigen Bereich der tragbaren Vorrichtung ganz einfach verbreitern, sodass sich dieser Bereich im Getränkehalter verklemmt. Soll die tragbare Vorrichtung wieder aus dem Fahrzeug entfernt werden, so muss lediglich die Push-Push-Verriegelungsmechanik durch erneutes Drücken betätigt werden.

Das erfindungsgemäße Anzeigesystem für ein Fahrzeug umfasst die erfindungsgemäße tragbare Vorrichtung oder eine vorteilhafte Ausführungsform der erfindungsgemäßen tragbaren Vorrichtung sowie wenigstens eine elektronische Datenbrille zum Anzeigen einer virtuellen Realität und/oder einer erweiterten Realität. Die elektronische Datenbrille ist dazu eingerichtet, basierend auf den mittels der tragbaren Vorrichtung übertragbaren Bewegungsdaten eine Eigenbewegung des Fahrzeugs entsprechende Inhalte zur Reduzierung von simulatorkrankheitsbedingten Symptomen bei Verwendung der elektronischen Datenbrille im Fahrzeug anzuzeigen. Beispielsweise kann die elektronische Datenbrille eine sich mit einem Richtungsvektor des Fahrzeugs bewegende Struktur in einem peripheren Anzeigebereich anzeigen. Natürlich sind auf Basis der Bewegungsdaten auch andere Inhalte umsetzbar, welche die Eigenbewegung des Fahrzeugs visualisieren, um bei einem Träger der elektronischen Datenbrille während der Fahrt mit dem Fahrzeug das Auftreten der Simulatorkrankheit zu verhindern oder diesbezügliche Störungen zumindest erheblich zu reduzieren.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Anzeigesystems für ein Fahrzeug, umfassend eine tragbare Vorrichtung zur Reduzierung von simulatorkrankheitsbedingten Störungen bei Verwendung einer elektronischen Datenbrille in einem Fahrzeug; und in
- Fig. 2: eine stark schematisierte Darstellung der elektronischen Datenbrille, während mittels dieser in einem zentralen Bereich virtuelle Inhalte und in einem peripheren Bereich einer Eigenbewegung des Fahrzeugs entsprechende Inhalte angezeigt werden.

In den Figuren sind gleiche oder funktionsgleiche Elemente mit den gleichen Bezugszeichen versehen worden.

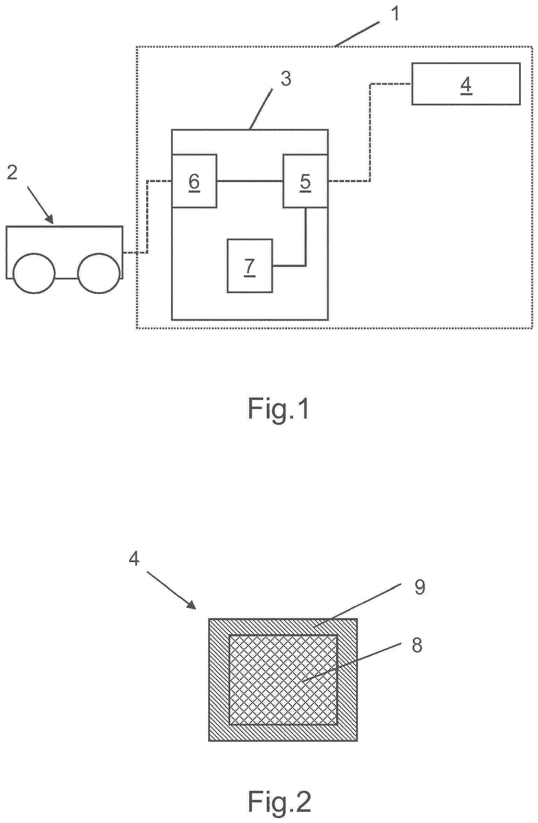

Ein Anzeigesystem 1 für ein Fahrzeug 2 ist in einer stark schematisierten Darstellung in Fig. 1 gezeigt. Das Anzeigesystem 1 umfasst eine tragbare Vorrichtung 3 zur Reduzierung von simulatorkrankheitsbedingten Störungen bei Verwendung einer elektronischen Datenbrille 4 in dem Fahrzeug 2. Bei der elektronischen Datenbrille 4 kann es sich um eine Virtual-Reality-Brille oder auch um eine Augmented-Reality-Brille handeln. Die elektronische Datenbrille 4 kann auch dazu ausgelegt sein, sowohl eine virtuelle Realität als auch eine erweiterte Realität anzuzeigen.

Die tragbare Vorrichtung 3 weist vorzugsweise die Form einer Getränkedose auf, sodass die tragbare Vorrichtung 3 auf einfache Weise und crashsicher beispielsweise in einem hier nicht näher dargestellten Getränkehalter des Fahrzeugs 2 verstaut werden kann. Zusätzlich kann die tragbare Vorrichtung 3 auch eine hier nicht näher dargestellte Mechanik zum Verkanten und/oder Verklemmen der tragbaren Vorrichtung 3 in dem besagten fahrzeugseitigen Getränkehalter aufweisen.

Die Mechanik kann beispielsweise durch einen Schraubmechanismus gebildet sein, mittels welchem ein auf den Getränkehalter abgestimmter, hier nicht näher dargestellter Bereich der tragbaren Vorrichtung 3 verbreiterbar und verschmälerbar ist. Alternativ oder zusätzlich kann die Mechanik auch eine Push-Push-Verriegelungsmechanik aufweisen, mittels welcher ein auf den Getränkehalter abgestimmter Bereich der tragbaren Vorrichtung 3 durch ein erstes Zusammendrücken verbreiterbar und durch ein zweites Zusammendrücken wieder verschmälerbar ist. In diesem Zusammenhang kann es beispielsweise vorgesehen sein, dass die tragbare Vorrichtung 3 in dem auf den Getränkehalter abgestimmten Bereich aus Gummi hergestellt ist oder einen gummierten Bereich aufweist, welcher durch Betätigung der Push-Push-Verriegelungsmechanik verbreiterbar und verschmälerbar ist. Dadurch kann die tragbare Vorrichtung 3 auf besonders einfache und bequeme Weise im besagten Getränkehalter fixiert und wiederum von diesem gelöst werden.

Die tragbare Vorrichtung 1 zur Reduzierung von simulatorkrankheitsbedingten Störungen bei Verwendung der elektronischen Datenbrille im Fahrzeug 2 umfasst einen Datenausgang 5, welcher dazu ausgelegt ist, eine Eigenbewegung des Fahrzeugs 2 charakterisierende Bewegungsdaten an die elektronische Datenbrille 4 zu übertragen. Der Datenausgang 5 kann dabei sowohl eine drahtlose als auch eine kabelgebundene Schnittstelle zur Datenübertragung an die elektronische Datenbrille 4 aufweisen. Die Datenbrille 4 weist selbst eine hier nicht näher dargestellte Datenschnittstelle auf, die kompatibel mit dem Datenausgang 5 ist.

Im vorliegend gezeigten Fall umfasst die tragbare Vorrichtung 3 einen Dateneingang 6, welcher dazu ausgelegt ist, die Bewegungsdaten vom Fahrzeug 2 zu empfangen. Der Dateneingang 6 kann dafür sowohl eine drahtlose als auch eine kabelgebundene Schnittstelle zur Datenübertragung der Bewegungsdaten vom Fahrzeug 2 aufweisen. Beispielsweise kann der Dateneingang 6 mit einer OBD-Schnittstelle des Fahrzeugs 2 verbunden werden, um so mittels fahrzeugseitig verbauten Sensoren erfasste Bewegungsdaten des Fahrzeugs 2 abzugreifen. Sofern es fahrzeugseitig möglich ist, die Bewegungsdaten auch drahtlos bereitzustellen, können die Bewegungsdaten auch drahtlos an den Dateneingang 6 übertragen werden.

Zudem weist die tragbare Vorrichtung 3 noch eine Sensoreinrichtung 7 zur Erfassung von zumindest einem Teil der die Eigenbewegung des Fahrzeugs 2 charakterisierenden Bewegungsdaten auf. Die Sensoreinrichtung 7 kann beispielsweise einen oder mehrere Beschleunigungssensoren aufweisen, mittels welchen die Eigenbewegung des Fahrzeugs 2 erfasst werden kann. So ist es mittels der tragbaren Vorrichtung 3 auch möglich, die Eigenbewegung des Fahrzeugs 2 völlig unabhängig von einer im Fahrzeug 2 verbauten oder nicht verbauten Sensorik zu erfassen. Die Sensoreinrichtung 7 ist wiederum mit dem Datenausgang 5 datentechnisch verbunden.

Unabhängig davon, wie die Eigenbewegung des Fahrzeugs 2 erhoben wird, können über den Datenausgang 5 der tragbaren Vorrichtung 3 die Eigenbewegung des Fahrzeugs 2 charakterisierende Bewegungsdaten an die elektronische Datenbrille 4 übertragen werden.

In Fig. 2 ist die elektronische Datenbrille 4 stark schematisiert dargestellt, wobei im großen mittleren Anzeigebereich 8 eine virtuelle Realität und/oder eine erweiterte Realität angezeigt werden kann. Um bei einem Träger der elektronischen Datenbrille 4 während der Fahrt mit dem Fahrzeug 2 simulatorkrankheitsbedingte Störungen zu reduzieren oder zu verhindern, ist die elektronische Datenbrille 4 dazu ausgelegt, in einem peripheren Anzeigebereich 9 basierend auf den mittels der tragbaren Vorrichtung 3 übertragbaren Bewegungsdaten einer Eigenbewegung des Fahrzeugs 2 entsprechende Inhalte anzuzeigen.

Beispielsweise wird im zentralen Anzeigebereich 8 ein Film angezeigt, wobei in dem peripheren Anzeigebereich 9 verschiedenste Strukturen angezeigt werden können, welche sich entsprechend der Eigenbewegung des Fahrzeugs 2 bewegen. Der Träger der elektronischen Datenbrille 4 nimmt also in seinem peripheren Sichtfeld diese Strukturen wahr. Infolgedessen nimmt der Träger der elektronischen Datenbrille 4 zumindest peripher visuelle Reize wahr, welche der Eigenbewegung des Fahrzeugs 2 entsprechen. Diese visuellen Reize decken sich dann wiederum mit der Wahrnehmung seines Gleichgewichtssinns. Infolgedessen können simulatorkrankheitsbedingte Störungen in erheblichem Maße reduziert oder vollständig verhindert werden, wenn ein Benutzer die elektronische Datenbrille 4 während der Fahrt mit dem Fahrzeug 2 verwendet.

Die Darstellungen der mit der Eigenbewegung des Fahrzeugs 2 korrespondierenden Inhalte in dem peripheren Anzeigebereich 9 sind nur rein beispielhaft zu verstehen. Grundsätzlich können die mit der Eigenbewegung des Fahrzeugs 2 korrespondierenden Inhalte in beliebigen Anzeigebereichen der elektronischen Datenbrille 4 angezeigt werden, um simulatorkrankheitsbedingte Störungen bei der Verwendung der elektronischen Datenbrille 4 im Fahrzeug 2 zu reduzieren oder vollständig zu eliminieren.

## Patentansprüche

1. Anzeigesystem (1) für ein Fahrzeug (2), umfassend eine tragbare Vorrichtung (3), umfassend einen Datenausgang (5), welcher dazu ausgelegt ist, eine Eigenbewegung des Fahrzeugs (2) charakterisierende Bewegungsdaten an die elektronische Datenbrille (4) zu übertragen, und wenigstens eine elektronische Datenbrille (4) zum Anzeigen einer virtuellen Realität und/oder einer erweiterten Realität,
**dadurch gekennzeichnet,**
**dass** die elektronische Datenbrille (4) dazu eingerichtet ist, basierend auf den mittels der tragbaren Vorrichtung (3) übertragbaren Bewegungsdaten einer Eigenbewegung des Fahrzeugs (2) entsprechende Inhalte zur Reduzierung von simulatorkrankheitsbedingten Symptomen bei Verwendung der elektronischen Datenbrille (4) im Fahrzeug (2) anzuzeigen, wobei die tragbare Vorrichtung (3) derart dosenförmig ausgeführt ist, dass sie in einem Getränkehalter des Fahrzeugs (2) untergebracht werden kann.

2. Anzeigesystem (1) nach Anspruch 1, wobei der Datenausgang (5) eine drahtlose und/oder kabelgebundene Schnittstelle zur Datenübertragung an die elektronische Datenbrille (4) aufweist.

3. Anzeigesystem (1) nach Anspruch 1 oder 2, wobei die tragbare Vorrichtung (3) einen Dateneingang (6) umfasst, welcher dazu ausgelegt ist, die Bewegungsdaten vom Fahrzeug (2) zu empfangen.

4. Anzeigesystem (1) nach Anspruch 3, wobei der Dateneingang (6) eine drahtlose und/oder kabelgebundene Schnittstelle zur Datenübertragung der Bewegungsdaten vom Fahrzeug (2) aufweist.

5. Anzeigesystem (1) nach einem der vorhergehenden Ansprüche, wobei die tragbare Vorrichtung (3) eine Sensoreinrichtung (7) zur Erfassung von zumindest einem Teil der die Eigenbewegung des Fahrzeugs (2) charakterisierenden Bewegungsdaten aufweist.

6. Anzeigesystem (1) nach einem der vorhergehenden Ansprüche, wobei die tragbare Vorrichtung (3) zur Energieversorgung eine Schnittstelle für ein Bordnetz des Fahrzeugs (2) aufweist und/oder für einen Batteriebetrieb ausgelegt ist.

7. Anzeigesystem (1) nach einem der vorhergehenden Ansprüche, wobei die tragbare Vorrichtung (3) eine Mechanik zum Verkanten und/oder Verklemmen der tragbaren Vorrichtung (3) in einem fahrzeugseitigen Getränkehalter aufweist.

8. Anzeigesystem (1) nach Anspruch 7, wobei die Mechanik einen Schraubmechanismus aufweist, mittels welchem ein auf den Getränkehalter abgestimmter Bereich der tragbaren Vorrichtung verbreiterbar ist.

9. Anzeigesystem (1) nach Anspruch 7 oder 8, wobei die Mechanik eine Push-Push-Verriegelungsmechanik aufweist, mittels welcher ein auf den Getränkehalter abgestimmter Bereich der tragbaren Vorrichtung (3) durch ein erstes Zusammendrücken verbreiterbar und durch ein zweites Zusammendrücken wieder verschmälerbar ist.

## Claims

1. Display system (1) for a vehicle (2), comprising a portable device (3) comprising a data output (5) adapted to transmit motion data characterising a motion of the vehicle (2) itself to the electronic augmented reality glasses (4), and at least one electronic augmented reality glasses (4) for displaying a virtual reality and/or an augmented reality,
**characterised in that** the electronic augmented reality glasses (4) are adapted to display, based on the motion data of a motion of the vehicle (2) itself that can be transmitted by means of the portable device (3), corresponding contents for reducing simulator sickness-induced symptoms when the electronic augmented reality glasses (4) are used in the vehicle (2), the portable device (3) being configured in the form of a can in such a way that it can be accommodated in a beverage holder of the vehicle (2).

2. Display system (1) according to claim 1,
wherein the data output (5) has a wireless and/or wired interface for data transmission to the electronic augmented reality glasses (4).

3. Display system (1) according to claim 1 or 2,
wherein the portable device (3) comprises a data input (6) which is adapted to receive the movement data from the vehicle (2).

4. Display system (1) according to claim 3,
wherein the data input (6) has a wireless and/or wired interface for transmitting the movement data from the vehicle (2).

5. Display system (1) according to any one of the preceding claims,
wherein the portable device (3) has a sensor device (7) for detecting at least part of the movement data characterising the movement of the vehicle (2) itself.

6. Display system (1) according to any one of the preceding claims,
wherein for power supply the portable device (3) has an interface for an on-board power system of the vehicle (2) and/or is adapted for battery operation.

7. Display system (1) according to any one of the preceding claims,
wherein the portable device (3) has a mechanism for tilting and/or jamming the portable device (3) in a vehicle-mounted beverage holder.

8. Display system (1) according to claim 7,
wherein the mechanism has a screw mechanism, by means of which a region of the portable device matched to the beverage holder can be widened.

9. Display system (1) according to claim 7 or 8,
wherein the mechanism has a push-push locking mechanism, by means of which a region of the portable device (3) matched to the beverage holder can be widened by a first compression and narrowed again by a second compression.

## Revendications

1. Système d'affichage (1) pour un véhicule (2), comprenant un dispositif (3) portatif, comprenant une sortie de données (5) qui est conçue afin de transmettre des données de déplacement caractérisant un propre mouvement du véhicule (2) aux lunettes de données (4) électroniques, et au moins des lunettes de données (4) électroniques pour l'affichage d'une réalité virtuelle et/ou d'une réalité élargie,
**caractérisé en ce**
**que** les lunettes de données (4) électroniques sont conçues afin d'afficher sur la base des données de déplacement pouvant être transmises au moyen du dispositif (3) portatif des contenus correspondants à un propre mouvement du véhicule (2)pour la réduction de symptômes dus au mal du simulateur lors de l'utilisation des lunettes de données (4) électroniques dans le véhicule (2), dans lequel le dispositif (3) portatif est réalisé en forme de boîte de telle manière qu'il puisse être logé dans un porte-boisson du véhicule (2).

2. Système d'affichage (1) selon la revendication 1,
dans lequel la sortie de données (5) présente une interface sans fil et/ou filaire pour la transmission de données aux lunettes de données (4) électroniques.

3. Système d'affichage (1) selon la revendication 1 ou 2,
dans lequel le dispositif (3) portatif comporte une entrée de données (6) qui est conçue afin de recevoir les données de déplacement du véhicule (2).

4. Système d'affichage (1) selon la revendication 3,
dans lequel l'entrée de données (6) présente une interface sans fil et/ou filaire pour la transmission des données de déplacement du véhicule (2).

5. Système d'affichage (1) selon l'une des revendications précédentes,
dans lequel le dispositif (3) portatif présente un dispositif de détection (7) pour la détection d'au moins une partie des données de déplacement caractérisant le propre mouvement du véhicule (2).

6. Système d'affichage (1) selon l'une des revendications précédentes,
dans lequel le dispositif (3) portatif présente pour l'alimentation en énergie une interface pour un réseau de bord du véhicule (2) et/ou est conçu pour un fonctionnement sur batterie.

7. Système d'affichage (1) selon l'une des revendications précédentes,
dans lequel le dispositif (3) portatif présente un mécanisme pour le blocage et/ou le serrage du dispositif (3) portatif dans un porte-boisson côté véhicule.

8. Système d'affichage (1) selon la revendication 7,
dans lequel le mécanisme présente un mécanisme de vissage, au moyen duquel une zone adaptée au porte-boisson du dispositif portatif peut être élargie.

9. Système d'affichage (1) selon la revendication 7 ou 8,
dans lequel le mécanisme présente un mécanisme de verrouillage push-push, au moyen duquel une zone adaptée au porte-boisson du dispositif (3) portatif peut être élargie par une première compression et peut être de nouveau rétrécie par une seconde compression.
